# EUROPEAN PATENT APPLICATION

(11) **EP 4 512 650 A1**
(43) Date of publication of application: **26.02.2025**
(21) Application number: 24189313.0
(22) Date of filing: 18.07.2024
(51) Int. Cl.: B60L 3/00, B60L 58/12, B64D 45/00

(54) **METHODS, SYSTEMS, BATTERY, CHARGING STATION**

(30) Priority: 18.08.2023 GB 202312627
(71) Applicant: Rolls-Royce plc, London N1 9FX (GB); Rolls-Royce Deutschland Ltd & Co KG, 15827 Blankenfelde-Mahlow (DE)
(72) Inventor: Nadarajan, Sivakumar, Derby, DE24 8BJ (GB); Schildt, Philipp, Derby, DE24 8BJ (GB)
(74) Representative: Rolls-Royce plc

(57) **Abstract**

A method for gathering inflight data during operation of an electric or hybridelectric aircraft. The aircraft includes: a swappable battery pack, connected to an electrical system of the aircraft, the swappable battery pack including a data storage module accessible via a data interface of the swappable battery pack; and a control unit, connected to the swappable battery pack via the data interface. The method includes, while the aircraft is in flight, gathering, by the control unit, the inflight data from the aircraft and saving the gathered inflight data to the data storage module of the swappable battery pack.

## Description

### FIELD OF THE INVENTION

The present invention relates to methods, systems, a swappable battery pack, and a charging station.

### BACKGROUND

Interest in aircraft with purely electric and hybrid electric propulsion systems is increasing because of the need to reduce carbon emissions and pollution, and because of developments in the facilitating electrical technologies. Hybrid electric propulsion systems include both internal combustion engines, for example gas turbines or diesel engines, and energy storage, typically in the form of batteries. Purely electric propulsion systems completely dispense with internal combustion engines and use only batteries and/or, in some instances, fuel cells, as an energy source for their propulsors.

Urban Air Mobility (UAM) refers to the use of aircraft - typically purely electric aircraft - to transport passengers relatively short distances, for example tens of kilometres. Most proposed UAM platforms, sometimes known as air taxis' or 'flying taxis', have Vertical Take-Off and Landing (VTOL) or Short Take-Off and Landing (STOL) capabilities so that the aircraft can take-off and land at locations convenient for passengers. Hybrid electric aircraft may have greater ranges.

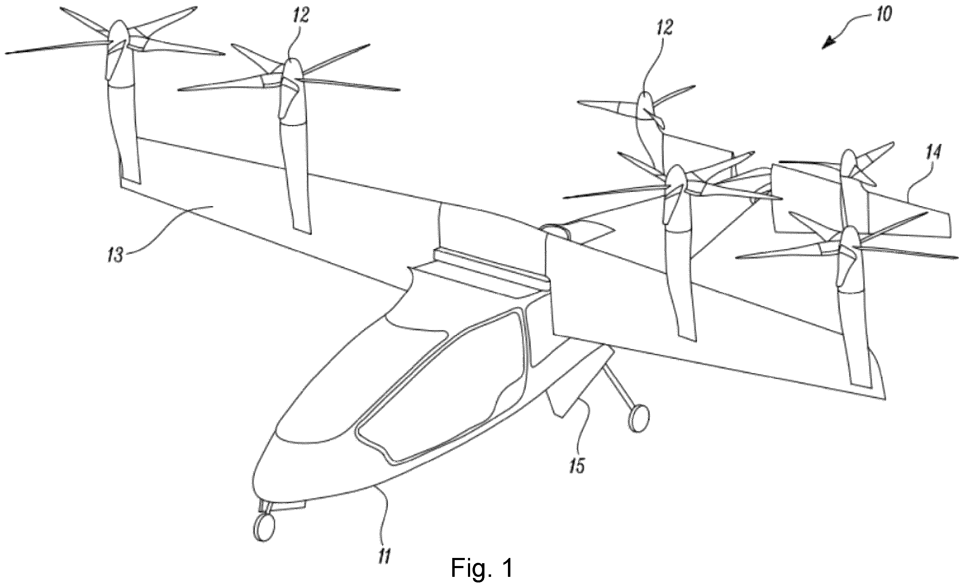

FIG. 1 illustrates an electric aircraft 10 which may be used for UAM applications. The aircraft includes a fuselage 11, which incorporates a cabin for occupants, and a distributed propulsion system which in this case has six open rotor propulsors 12 driven by rotary electric machines. Also visible in FIG. 1 is a retractable undercarriage 15 in which a landing platform, in this case having wheels, can be stowed during flight.

The size of the fuselage 11 and the cabin will depend on the application requirements, but in this example they are sized for five occupants including a pilot. It is however envisaged that some UAM platforms will not require a pilot and will instead be flown under the control of an autopilot system.

Four of the propulsors 12 are attached to the wings 13 of the aircraft 10, and the remaining two propulsors 12 are attached to a separate flight control surface 14 located towards the rear of the aircraft 10. In this embodiment the wings 13 and the rear control surface 14 are tiltable between a VTOL configuration in which the axes of the rotors point upward and a horizontal flight configuration in which the axes of the rotors point forward. The horizontal flight configuration, whilst principally used for horizontal flight, may also be used for taxiing and possibly STOL operation if supported.

The electrical systems, including the electric machines that power the aircraft 10, receive electrical power from one or more battery packs located within the aircraft. The battery packs may be located in any suitable part or parts of the aircraft, including the fuselage 11, the wings 13 and the propulsors 12.

Whilst the illustrated aircraft 10 is an electric VTOL (eVTOL) aircraft, it will be appreciated that UAM platforms could also be of the STOL type. Hybrid electric platforms may utilize similar distributed propulsion system configurations, but the underlying power system may be a series hybrid, parallel hybrid, turboelectric or other type of hybrid power system.

It would be desirable to perform regular health assessments to identify faults and possible maintenance needs of such aircraft systems. Currently, in civil aviation, a data logging and transfer device with a relatively high power cellular modem is used to transfer inflight data to a remote device, and a discrete Weight-on-Wheels (WoW) signal is derived from an interlock on the aircraft wheels to determine if the aircraft is in the air or on the ground (to avoid the use of the high power radio during flight). However, there are several drawbacks to such a system. For example, the WoW signal does not provide an indication that an aircraft is about take-off, and so there is an abrupt termination of the data connection.

### SUMMARY

In a first aspect, embodiments of the invention provide a method for gathering inflight data during operation of an electric or hybrid-electric aircraft, the aircraft including:
a swappable battery pack, connected to an electrical system of the aircraft, the swappable battery pack including a data storage module accessible via a database interface of the swappable battery pack;
a control unit, connected to the swappable battery pack via the data interface;
   the method including:
while the aircraft is in flight, gathering, by the control unit, the inflight data from the aircraft and saving the gathered inflight data to the data storage module of the swappable battery pack.

Such a method reduces the complexity of offloading inflight data from the aircraft, as the need for a dedicated data logging and transmission unit/device (DLTU), with the corresponding supporting infrastructure, is negated. Further, no cellular connection is required and correspondingly no WoW signal need be derived.

By swappable battery pack, it may be meant a discrete unit which can be readily removed from and fitted to an aircraft and therefore readily connected to and disconnected from the electrical system of the aircraft. The swappable battery pack may be removed and replaced with a battery pack of the same configuration, for example a charge-depleted battery pack may be swapped with a freshly charged battery pack, to reduce a turnaround time between flights. For example, the swappable battery pack may include one or more external power terminals which connect to power terminals of the electrical system of the aircraft, and one or more control terminals which connect a battery management system of the swappable battery pack to a control system of the electrical system of the aircraft. The swappable battery pack may include a single power cell, a plurality of power cells, or a plurality of banks of power cells (for example in series or in parallel).

The method may further include, after the aircraft has landed, removing the swappable battery pack from the aircraft and connecting the swappable battery pack to a charging station, the charging station may then retrieve the gathered inflight data from the data storage module of the swappable battery pack.

The method may further include the charging station transmitting the gathered inflight data to a remote server. For example, the charging station may be connected to the internet, and may transmit the gathered inflight data over the internet to a cloud server.

The swappable battery pack and the charging station may each include a respective wireless connectivity module, and the charging station may connect to the swappable battery pack via the respective wireless connectivity modules. The wireless connectivity module may be, for example, a Wi-Fi (RTM), Bluetooth (RTM), Zigbee (RTM), or LoRa module. In examples where the swappable battery pack and charging station each include a respective wireless connectivity module, the wireless connection may be established once the aircraft has landed. For example, once it is determined that the swappable battery pack is not providing power to / from the propulsion unit. This determination that the swappable battery pack is not being used may be made by the battery management system.

After retrieving the gathered inflight data from the data storage module of the swappable battery pack, the charging station may delete the data stored in the data storage module of the swappable battery pack. For example, the charging station may send an instruction or message to the swappable battery pack requesting that the data is deleted.

The control unit, or another component of the electrical system of the aircraft such as an electrical propulsion system controller, or a flight controller, may tag the gathered inflight data with aircraft-identifying metadata. For example, the gathered inflight data may be tagged with a tail number of the aircraft in which the swappable battery pack is fitted.

The control unit may buffer the gathered inflight data in an intermediate storage unit, and may save the gathered inflight data to the data storage module of the swappable battery pack from the intermediate storage unit. Where the control unit is a network switch, this means that the intermediate storage unit can utilise lower cost or simpler communication protocols to transfer data to the swappable battery pack and so the swappable battery pack need not be fitted with a network interface.

The control unit may be a network switch connected to the data interface of the swappable battery pack and to one or more of: a power distribution system of the aircraft, an electrical propulsion unit of the aircraft, and a battery management system of the swappable battery pack.

The electrical system of the aircraft, where the aircraft is an electric aircraft, may include the power distribution system of the aircraft and the electrical propulsion unit of the aircraft. Where the aircraft is a hybrid-electric aircraft, the control unit may be connected to only the power distribution system.

The charging station may include a server and a gateway, the server being connectable to the swappable battery pack, and the gateway being connected to the server. The gateway may establish a connection via the internet with the remote server.

In a second aspect, embodiments of the invention provide a method for retrieving inflight data gathered during operation of an electric or hybrid-electric aircraft, the method including:
connecting a swappable battery pack to a charging station, wherein the swappable battery pack includes a data storage module storing inflight data gathered during flight of the aircraft; and
retrieving, from the data storage module of the swappable battery pack to the charging station, the stored inflight data gathered during flight of the aircraft.

The method may further include the charging station transmitting the inflight data on to a remote server, for example via the internet.

The charging station may connect to the swappable battery pack via one or more power terminals and one or more data connectors, the one or more power terminals providing power to the swappable battery pack so as to charge the battery pack, and the one or more data connectors allowing the transfer of data between the swappable battery pack and the charging station.

The swappable battery pack and the charging station may each include a wireless connectivity module, which may embody the data connector, and allow wireless communication of data between the two. In examples where the swappable battery pack and charging station each include a respective wireless connectivity module, the wireless connection may be established once the aircraft has landed. For example, once it is determined that the swappable battery pack is not providing power to / from the propulsion unit. This determination that the swappable battery pack is not being used may be made by the battery management system.

The method may further include, after the data has been retrieved, the charging station deleting the data stored in the data storage module of the swappable battery pack.

In a third aspect, embodiments of the invention provide an electric or hybrid-electric aircraft including:
an electrical system;
a swappable battery pack, connected to the electrical system, and including a data storage module accessible via a data interface of the swappable battery pack; and
a control unit, connected to the swappable battery pack via the data interface;
wherein the control unit is configured to gather inflight data from the aircraft and save the gathered inflight data to the data storage module of the swappable battery pack.

The control unit may be configured to tag the gathered inflight data with aircraft-identifying metadata.

The control unit may be configured to buffer the gathered inflight data in an intermediate storage unit, and save the gathered inflight data to the data storage module of the swappable battery pack from the intermediate storage unit.

The control unit may be a network switch connected to the data interface of the swappable battery pack and to one or more of: a power distribution system of the aircraft, an electrical propulsion unit of the aircraft, and a battery management system of the swappable battery pack.

The swappable battery pack may include a wireless connectivity module, configured to wirelessly connect to a charging station via the wireless connectivity module and transfer the gathered inflight data to the charging station via the wireless connection. The wireless connection may be established once the aircraft has landed. For example, once it is determined that the swappable battery pack is not providing power to / from the propulsion unit. This determination that the swappable battery pack is not being used may be made by the battery management system.

In a fourth aspect, embodiments of the invention provide a system for transferring inflight data collected from an electric or hybrid-electric aircraft, the system including:
a swappable battery pack including a data storage module connectable to a control unit of the aircraft via a data interface of the swappable battery pack, the data storage module being configured to receive and store, during flight of the aircraft, inflight data gathered by the control unit; and
a charging station, connected to swappable battery pack, and configured to retrieve the gathered inflight data from the data storage module of the swappable battery pack.

The charging station may be configured to transmit the gathered inflight data to a remote server.

The swappable battery pack and the charging station may each include a respective wireless connectivity module, and the charging station may be connected to the swappable battery pack via the respective wireless connectivity modules. In examples where the swappable battery pack and charging station each include a respective wireless connectivity module, the wireless connection may be established once the aircraft has landed. For example, once it is determined that the swappable battery pack is not providing power to / from the propulsion unit. This determination that the swappable battery pack is not being used may be made by the battery management system. After retrieving the gathered inflight data from the data storage module of the swappable battery pack, the charging station may be configured to delete the data stored in the data storage module of the swappable battery pack.

In a fifth aspect, embodiments of the invention provide a swappable battery pack for an electric or hybrid-electric aircraft, the swappable battery pack including:
a data storage module; and
a data interface;
wherein the swappable battery pack is connectable to a control unit of the aircraft via the data interface, and configured to receive gathered inflight data from the control unit of the aircraft and store the received inflight data in the data storage module; and
wherein the swappable battery pack is also connectable to a charging station, and configured to provide the inflight data stored in the data storage module to the charging station.

The swappable battery pack may also include a wireless connectivity module, configured to connect to a respective wireless connectivity module of the charging station. In examples where the swappable battery pack and charging station each include a respective wireless connectivity module, the wireless connection may be established once the aircraft has landed. For example, once it is determined that the swappable battery pack is not providing power to / from the propulsion unit. This determination that the swappable battery pack is not being used may be made by the battery management system.

In a sixth aspect, embodiments of the invention provide a charging station, comprising a charging port for connection to a power port of a swappable battery pack and a data connector for connection to the swappable battery pack;
wherein the charging station is configured to:
access inflight data stored in a data storage module of the swappable battery pack via the data connector; and
transfer the inflight data from the data storage module to the charging station.

The charging station may be further configured to transfer the gathered inflight data to a remote server.

The data connector may utilise a data interface of the swappable battery pack, this being the same data interface used inflight for the swappable battery pack to receive data from a control unit of the aircraft. Alternatively, the data connector may utilise a different interface. For example a discrete set of connectors on the swappable battery pack, and/or a wireless connectivity module.

The charging station may be configured to, after retrieving the gathered inflight data from the data storage module of the swappable battery pack, delete the data stored in the data storage module of the swappable battery pack.

The invention includes the combination of the aspects and preferred features described except where such a combination is clearly impermissible or expressly avoided.

Further aspects of the present invention provide: a computer program comprising code which, when run on a computer, causes the computer to perform the method of the first or second aspects; a computer readable medium storing a computer program comprising code which, when run on a computer, causes the computer to perform the method of the first or second aspects; and a computer system programmed to perform the method of the first or second aspects.

### BRIEF DESCRIPTION OF THE DRAWINGS

Embodiments and experiments illustrating the principles of the invention will now be discussed with reference to the accompanying figures in which:
**FIG. 1** is a perspective view of an electric aircraft in a VTOL configuration;
**FIG. 2** is a schematic illustration of an onboard electrical propulsion system (EPS); and
**FIG. 3** is a schematic illustration of a ground-side charging station.

### DETAILED DESCRIPTION

Aspects and embodiments of the present invention will now be discussed with reference to the accompanying figures. Further aspects and embodiments will be apparent to those skilled in the art.

As noted above, it would be desirable to perform regular health assessments to identify faults and possible maintenance needs of such aircraft systems.

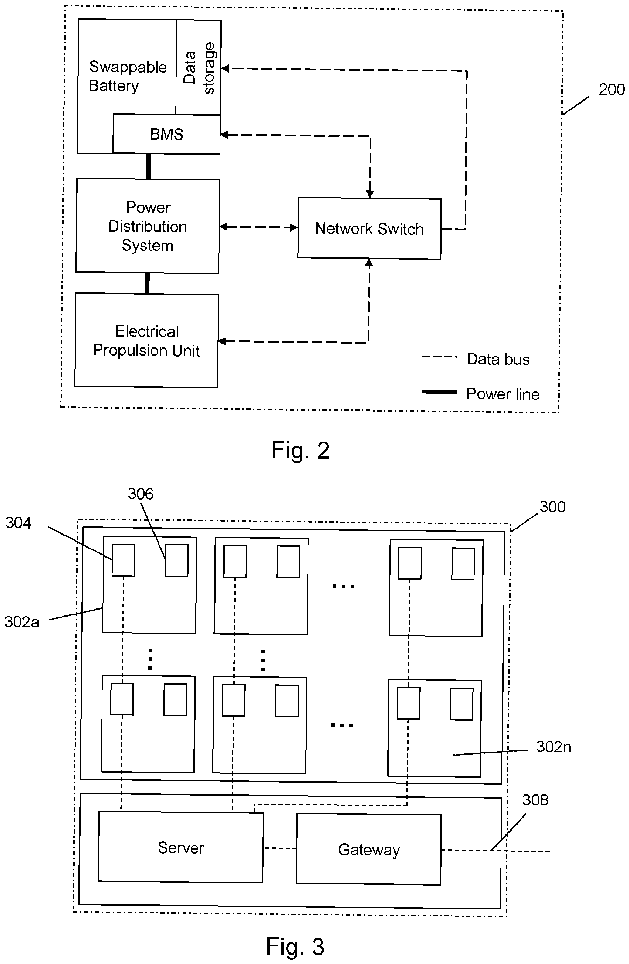

FIG. 2 illustrates an onboard Electrical Propulsion System (EPS) 200 for an electric aircraft. It includes a swappable battery pack, a power distribution system, an electrical propulsion unit, and a network switch. The swappable battery pack itself includes a data storage module and a battery management system, both of which are connected via data buses to the network switch. The power distribution system (for example an arrangement of power connectors, transformers, converters, etc.) is also connected to the network switch via a data bus. It is also connected to the swappable battery pack, for example via a power line for the transfer of power back and forth.

The electrical propulsion system is connected to the power distribution system via a power line, and to the network switch via a data bus. In use, power can thereby flow from the distribution system to the propulsion unit or vice versa (during regeneration mode), and data can be transferred backwards and forwards between the network switch and the electrical propulsion unit. The EPS also includes other components, such as insulation monitoring device(s) etc., which are not shown in FIG. 2.

During flight, the data from electrical propulsion unit, power distribution system, and flight controller are transferred to the data storage module of the swappable battery via through the network switch in the data bus. Whilst only a single swappable battery pack is shown, in some examples a plurality of swappable battery packs are provided, some or all of which may include data storage modules.

The data storage module may be implemented as volatile memory (e.g., random access memory), as non-volatile memory (e.g., a hard disk drive and/or solid state memory) or a combination thereof. It may have a capacity suitable to record data over multiple flight cycles, for example in excess of a gigabyte.

The gathered inflight data can be tagged with aircraft-identifying data, for example a tail number of the aircraft. It can also be tagged with flight identifying information (e.g. which commercial flight the aircraft was operating). The gathered inflight data can include, for example, electric engine / engine parameters of one or more propulsion units of the aircraft (e.g. gas turbine engines, electrically powered fans, etc.), state of charge information of one or more energy sources in the aircraft (e.g., the or each swappable battery pack), a level of a fuel tank providing fuel to a gas turbine engine, data indicative of the flight conditions of the aircraft (e.g., weather information, pressure data, air speed, ground speed), and data indicative of pilot inputs (e.g., requested power levels, flight surface input data, etc.).

FIG. 3 is a schematic illustration of a ground-side charging station 300. It includes a plurality of swappable battery pack holders 302a to 302n, although in some embodiments there may be a single swappable battery pack holder. Each swappable battery pack holder includes, in this example, a data port 304 and a power port 306. Each port may be implemented as a two or more terminals, for example a positive and negative terminal for the transfer of power. The data ports 304 are connected to a server of the charging station via data cables 308, the server being configured to communicate with each of the swappable battery packs when placed in respective swappable battery pack holders.

In other examples, the ground-side charging station 300 does not have a data port 304 for each of the swappable battery holders, but instead uses a wireless connectivity module to connect to a respective wireless connectivity module in the or each swappable battery pack. This connection can be triggered in response to the swappable battery pack being placed in a given swappable battery holder. This connection can also be triggered in response to the swappable battery (e.g., the BMS) determining that the swappable battery is not being used, which indicates the aircraft has landed. As the wireless connectivity modules are typically low power ones (e.g., Wi-Fi (RTM), Bluetooth (RTM), Zigbee (RTM), or LoRa) there is no need to obtain a WoW signal. Therefore the data transfer from the swappable battery to the ground-side charging station can occur whilst the swappable battery is still within the aircraft.

The server is configured to retrieve from one or more of the swappable battery packs, the gathered inflight data stored in their respective data storage modules. This data can be stored locally, or sent via a gateway to a remote server (for example to a cloud instance via the internet). Once the server has retrieved the inflight data, it can erase the copy of the data stored in the data storage module of the swappable battery pack. For example, by issuing a command to the swappable battery pack to erase the data stored in its data storage module.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/-10%.

## Claims

1. A method for gathering inflight data during operation of an electric or hybrid-electric aircraft, the aircraft including:
a swappable battery pack, connected to an electrical system of the aircraft, the swappable battery pack including a data storage module accessible via a data interface of the swappable battery pack;
a control unit, connected to the swappable battery pack via the data interface;
the method including:
while the aircraft is in flight, gathering, by the control unit, the inflight data from the aircraft and saving the gathered inflight data to the data storage module of the swappable battery pack.

2. The method of claim 1 further including, after the aircraft has landed, removing the swappable battery pack from the aircraft and connecting the swappable battery pack to a charging station, and wherein the charging station retrieves the gathered inflight data from the data storage module of the swappable battery pack.

3. The method of claim 2, further including the charging station transmitting the gathered inflight data to a remote server.

4. The method of claim 2 or 3, wherein the swappable battery pack and the charging station each include a respective wireless connectivity module, and wherein the charging station connects to the swappable battery pack via the respective wireless connectivity modules.

5. The method of any of claims 2 to 4, wherein after retrieving the gathered inflight data from the data storage module of the swappable battery pack, the charging station deletes the data stored in the data storage module of the swappable battery pack.

6. The method of any preceding claim, wherein the control unit tags the gathered inflight data with aircraft-identifying metadata.

7. The method of any preceding claim, wherein the control unit buffers the gathered inflight data in an intermediate storage unit, and saves the gathered inflight data to the data storage module of the swappable battery pack from the intermediate storage unit.

8. The method of any preceding claim, wherein the control unit is a network switch connected to the data interface of the swappable battery pack and to one or more of: a power distribution system of the aircraft, an electrical propulsion unit of the aircraft, and a battery management system of the swappable battery pack.

9. A method for retrieving inflight data gathered during operation of an electric or hybrid-electric aircraft, the method including:
connecting a swappable battery pack to a charging station, wherein the swappable battery pack includes a data storage module storing inflight data gathered during flight of the aircraft; and
retrieving, from the data storage module of the swappable battery pack to the charging station, the stored inflight data gathered during flight of the aircraft.

10. The method of claim 9, further comprising:
transmitting, by the charging station, the inflight data on to a remote server.

11. The method of claim 9, wherein the swappable battery pack and the charging station each include a wireless connectivity module, and wherein connecting the swappable battery pack to the charging station comprises:
determining that the swappable battery pack is not providing power to a propulsion unit of the aircraft; and
after determining that the swappable battery pack is not providing power to the propulsion unit of the aircraft, establishing wireless connection between the swappable battery pack and the charging station.

12. The method of claim 9, further comprising:
after retrieving the data stored in the data storage module of the swappable battery pack, deleting the data.

13. An electric or hybrid-electric aircraft including:
an electrical system;
a swappable battery pack, connected to the electrical system, and including a data storage module accessible via a data interface of the swappable battery pack; and
a control unit, connected to the swappable battery pack via the data interface;
wherein the control unit is configured to gather inflight data from the aircraft and save the gathered inflight data to the data storage module of the swappable battery pack.

14. The aircraft of claim 13, wherein the control unit is further configured to tag the gathered inflight data with aircraft-identifying metadata.

15. A system for retrieving inflight data collected from an electric or hybrid-electric aircraft, the system including:
a swappable battery pack including a data storage module connectable to a control unit of the aircraft via a data interface of the swappable battery pack, the data storage module being configured to receive and store, during flight of the aircraft, inflight data gathered by the control unit; and
a charging station, connected to the swappable battery pack, and configured to retrieve the gathered inflight data from the data storage module of the swappable battery pack.
